(19) **Europäisches Patentamt**

**European Patent Office**

**Office européen des brevets**

(11) **EP 1 612 923 A1**

(12) **EUROPÄISCHE PATENTANMELDUNG**

(43) Veröffentlichungstag:
04.01.2006 Patentblatt 2006/01

(51) Int Cl.:
**H02P 6/08** (2006.01)

(21) Anmeldenummer: 05013450.1

(22) Anmeldetag: 22.06.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **03.07.2004 DE 102004032264**

(71) Anmelder: **LuK Lamellen und Kupplungsbau Beteiligungs KG**
**77815 Bühl (DE)**

(72) Erfinder:
• **Stork, Holger, Dr.**
**77815 Bühl (DE)**
• **Zimmermann, Martin**
**77880 Sasbach (DE)**
• **Schuhen, Michael**
**77815 Bühl-Oberweier (DE)**

(54) **Verfahren zum Messen der Drehzahl einer elektrischen Maschine**

(57) Bei einem Verfahren zum Messen der Drehzahl einer einen Stator, einen Läufer und eine Wicklung aufweisenden elektrischen Maschine, insbesondere eines EC-Motors, wird ein Drehzahlmesssignal w erfasst, indem für eine Reihe von Abtastzeitpunkten jeweils ein Drehzahlmesswert $\omega(k)$ für den Läufer ermittelt wird. Außerdem wird ein Trägheitsmomentwert für das Massenträgheitsmoment des Läufers bestimmt. Ferner wird ein Stromsignal I erfasst, indem für die einzelnen Abtastzeitpunkte jeweils ein Stromwert $I(k)$ für den elektrischen Strom in der Wicklung bestimmt wird. Für die einzelnen Drehzahlmesswerte $w(k)$ wird jeweils aus einem einem früheren Abtastzeitpunkt zugeordneten Drehzahlmesswert $\omega_k(k-1)$, dem Stromsignal I und dem Trägheitsmomentwert ein Schätzwert $\omega_s(k)$ für den Drehzahlmesswert $w(k)$ bestimmt. Diesem Schätzwert $\omega_s(k)$ ein Toleranzband zugeordnet, in dem der Schätzwert $\omega_s(k)$ enthalten ist. Für den Fall, dass der Drehzahlmesswert $w(k)$ außerhalb des Toleranzbands liegt, wird der Drehzahlmesswert $w(k)$ durch einen innerhalb des Toleranzbands befindlichen Drehzahlwert $\omega_k(k)$ ersetzt.

EP 1 612 923 A1

## Beschreibung

Die Erfindung betrifft ein Verfahren zum Messen der Drehzahl einer einen Stator, einen Läufer und eine Wicklung aufweisenden elektrischen Maschine, insbesondere eines EC-Motors, wobei ein Drehzahlmesssignal $\omega$ erfasst wird, indem für eine Reihe von Abtastzeitpunkten jeweils ein Drehzahlmesswert $\omega(k)$ für den Läufer ermittelt wird.

Ein derartiges Verfahren zum Messen der Drehzahl eines EC-Motors, der einen permanentmagnetischen Läufer aufweist, an dessen Umfang Magnetsegmente angeordnet sind, die mit einer am Stator angeordneten, elektronisch kommutierten Wicklung zusammenwirken, ist aus der Praxis bekannt. Dabei wird die Lage der Magnetsegmente mit Hilfe von Hall-Sensoren detektiert, die am Stator des EC-Motors angeordnet sind. Je nach Magnetfeld beträgt das Ausgangssignal der Hall-Sensoren 0 oder 1. Aus dem zeitlichen Abstand zwischen zwei aufeinander folgenden Wechseln in den Messsignalen der Hall-Sensoren und einem aus der Anzahl der Polpaare des Läufers berechneten Winkelversatz zwischen in Umfangsrichtung des Läufers zueinander benachbarten Magnetsegmenten werden Drehzahlmesswerte berechnet. Da die Magnetsegmente hinsichtlich ihrer Positionierung am Umfang des Läufers und hinsichtlich ihrer Abmessungen in Umfangsrichtung Fertigungstoleranzen aufweisen, die im Einzelnen nicht näher bekannt sind, ergeben sich jedoch Abweichungen zwischen dem tatsächlichen Winkelversatz und dem berechneten Winkelversatz, mit dem die Drehzahlmesswerte ermittelt werden. Fertigungstoleranzen von 20% sind durchaus üblich. Sie führen dazu, dass bei konstanter Läuferdrehzahl das Drehzahlmesssignal in schneller Folge beliebige Werte in einem Intervall von -20% bis +20% des tatsächlichen Drehzahlwerts annimmt.

Ein anderer Drehzahlfehler kann bei einer Richtungsumkehr des Läufers auftreten. Bei der Drehung in die eine Richtung ziehen zunächst ein erster Magnetabschnitt und dann ein zweiter Magnetabschnitt an einem Hallsensor vorbei. Durch den dadurch auftretenden Wechsel des Magnetfelds ändert sich das Ausgangssignal des Hall-Sensors. Kommt der Läufer zum Stillstand und bewegt sich dann in die entgegen gesetzte Richtung, so wird wieder der erste Magnetabschnitt an dem Hall-Sensor vorbeibewegt, was einen erneuten Wechsel das Ausgangssignals zur Folge hat. Der Zeitabstand zwischen den beiden Signalwechseln kann sehr kurz sein, wodurch fälschlicherweise eine sehr hohe Drehzahl ermittelt wird.

Das Drehzahlsignal könnte zwar geglättet werden, indem beispielsweise jeweils aus dem vorletzten, letzten und aktuellen Drehzahlmesswert der Mittelwert gebildet wird. Allerdings würde der gemittelte Drehzahlmesswert die Drehzahl dann nicht zum aktuellen Zeitpunkt widerspiegeln sondern zum Zeitpunkt des letzten Wechsels des Hall-Sensorsignals. Diese Zeitverzögerung zwischen dem berechneten Drehzahlsignal und dem tatsächlichen Drehzahlsignal ist vor allem dann nachteilig, wenn das Drehzahlsignal als Istwertsignal einem Drehzahlregelkreis zugeführt wird. Insbesondere bei kleinen Drehzahlen nimmt die Verzögerungszeit relativ große Werte an, wodurch die Qualität der Drehzahlregelung entsprechend abnimmt.

Es besteht deshalb die Aufgabe, ein Verfahren der eingangs genannten Art zu schaffen, das es auf einfache Weise ermöglicht, ein relativ genaues Drehzahlmesssignal zu bestimmen, das gegenüber den Drehzahlmesswerten praktisch keine Zeitverzögerung aufweist.

Diese Aufgabe wird dadurch gelöst, dass ein Trägheitsmomentwert für das Massenträgheitsmoment des Läufers bestimmt wird, dass ein Stromsignal I erfasst wird, indem für die einzelnen Abtastzeitpunkte jeweils ein Stromwert $I(k)$ für den elektrischen Strom in der Wicklung bestimmt wird, dass für die einzelnen Drehzahlmesswerte $\omega(k)$ jeweils aus einem einem früheren Abtastzeitpunkt zugeordneten Drehzahlmesswert $\omega_k(k-1)$, dem Stromsignal I und dem Trägheitsmomentwert ein Schätzwert $\omega_s(k)$ für den Drehzahlmesswert $\omega(k)$ bestimmt wird, dass diesem Schätzwert $\omega_s(k)$ ein Toleranzband zugeordnet wird, in dem der Schätzwert $\omega_s(k)$ enthalten ist, dass der Drehzahlmesswert $\omega(k)$ mit dem Toleranzband verglichen wird, und dass für den Fall, dass der Drehzahlmesswert $w(k)$ außerhalb des Toleranzbands liegt, der Drehzahlmesswert $\omega(k)$ durch einen innerhalb des Toleranzbands befindlichen Drehzahlwert $\omega_k(k)$ ersetzt wird.

In vorteilhafter Weise werden also Drehzahlmesswerte $w(k)$, die außerhalb des Toleranzbands liegen und die somit nicht plausibel sind, auf das Toleranzband begrenzt, wobei die Grenzwerte für das Toleranzband dynamisch ermittelt werden. Dadurch können Schwankungen in dem Drehzahlmesssignal auf einfache Weise geglättet werden, ohne dass es zu einer nennenswerten Zeitverzögerung zwischen dem geglätteten bzw. korrigierten Drehzahlmesssignal und dem gemessenen Drehzahlsignal kommt. Der Begrenzung liegt die dynamische Gleichung der elektrischen Maschine zugrunde:

$$ J \cdot d\omega/dt \;=\; K_t \cdot I $$

J ist das Massenträgheitsmoment des Läufers, w die Läufer-Drehzahl, $K_t$ eine Konstante der elektrischen Maschine, I der Wicklungsstrom und t die Zeit. Der Drehzahl-Schätzwert $\omega_s(k)$ lässt sich wie folgt bestimmen, wobei T eine Abtastdauer bedeutet:

$$\omega_s(k) \quad = \omega(k\text{-}1) + \frac{T \cdot K_t \cdot I(k\text{-}1)}{J}$$

Wenn die Breite des Toleranzbands auf $\pm \Delta\omega_{Grenz}$ festgelegt wird, können der obere Randwert $\omega_{HighLim}(k)$ und der untere Randwert $\omega_{LowLim}(k)$ des Toleranzbands für den k-ten Drehzahlmesswert w(k) ausgehend von dem Schätzwert $\omega_s$ wie folgt ermittelt werden:

$$\omega_{HighLim}(k) = \omega_s + \Delta\omega_{Grenz} \quad = \omega_k(k\text{–}1) + T\,K_t \cdot I(k\text{–}1)\,/\,J\ + \Delta\omega_{Grenz}$$

$$\omega_{LowLim}(k) = \omega_s - \Delta\omega_{Grenz} \quad = \omega_k(k\text{–}n) + T\,K_t \cdot I(k\text{–}1)\,/\,J\ - \Delta\omega_{Grenz}$$

Dabei wird die Breite $\pm\Delta\omega_{Grenz}$ des Toleranzbands vorzugsweise deutlich kleiner gewählt als die Schwankungsweite der Drehzahlmesswerte $\omega(k)$, um eine spürbare Reduzierung der Drehzahlschwankungen zu erreichen.

Bei einer vorteilhaften Ausführungsform der Erfindung wird der Läufer mit einem Lastmoment belastet, wobei für das Lastmoment ein Lastmomentsignal $M_L$ bereitgestellt wird, und wobei der Drehzahl-Schätzwert $\omega_s(k)$ jeweils aus dem dem früheren Abtastzeitpunkt zugeordneten Drehzahlmesswert $\omega_k(k\text{-}1)$, dem Stromsignal I, dem Lastmomentsignal $M_L$ und dem Trägheitsmomentwert bestimmt wird. Das Verfahren lässt sich also auch bei einer elektrischen Maschine anwenden, die mit einem Lastmomentsignal belastet ist. Dabei kann das Lastmoment den Läufer abbremsen oder antreiben. Die dynamische Gleichung der elektrischen Maschine lautet dann:

$$J \cdot d\omega/dt\ =\ K_t \cdot I - M_L$$

Daraus lassen sich der Drehzahl-Schätzwert $\omega_s(k)$ sowie der obere Randwert $\omega_{HighLim}(k)$ und der untere Randwert $\omega_{LowLim}(k)$ des Toleranzbands wie folgt bestimmen:

$$\omega_S(k) = \omega_k(k\text{-}1) + \frac{T \cdot K_t \cdot I(k\text{-}1)}{J}\ -\ \frac{T \cdot M_L(k\text{-}1)}{J}$$

$$\omega_{HighLim}(k) = \omega_S + \Delta\omega_{Grenz} \quad = \omega(k\text{–}1) + T\,/\,J\,[K_t \cdot I(k\text{–}1) - M_L(k\text{–}1)] + \Delta\omega_{Grenz}$$

$$\omega_{LowLim}(k) = \omega_S - \Delta\omega_{Grenz} \quad = \omega(k\text{–}1) + T\,/\,J\,[K_t \cdot I(k\text{–}1) - M_L(k\text{–}1)] - \Delta\omega_{Grenz}$$

Bei einer zweckmäßigen Ausführungsform der Erfindung wird die an der Wicklung anliegende elektrische Spannung erfasst, wobei die Stromwerte I(k) indirekt aus der Spannung, der Impedanz der Wicklung, dem gegebenenfalls korrigierten Drehzahlmesswert w(k) und einer Maschinenkonstanten $K_e$ bestimmt wird. Die entsprechende Systemgleichung lautet:

$$U \quad = R_A \cdot I + L_A \cdot dI/dt + K_e \cdot \omega_k$$

Dabei ist $R_A$ der ohmsche Widerstand der Wicklung, $L_A$ die Induktivität der Wicklung und $K_e$ die Maschinenkonstante der elektrischen Maschine. Das Verfahren kommt bevorzugt bei elektrischen Maschinen zu Einsatz, bei denen der Wicklungsstrom durch Pulsweitenmodulation einer an die Wicklung angelegten elektrischen Spannung eingestellt wird.

Vorteilhaft ist, wenn die Breite und/oder Lage des Toleranzbands in Abhängigkeit von dem dem früheren Abtastzeitpunkt zugeordneten Drehzahlmesswert w(k-1) gewählt und vorzugsweise mit zunehmender Drehzahl reduziert und/oder mit abnehmender Drehzahl vergrößert wird. Dadurch kann beispielsweise bei einer elektrischen Maschine, die mit einem drehzahlabhängigen Lastmoment belastet ist, für das nur ein Schätzwert oder ein Mittelwert vorliegt, dessen Genauigkeit von der Drehzahl abhängig ist, die Drehzahlabhängigkeit der Genauigkeit bei der Bestimmung der Breite des Toleranzbands berücksichtigt werden.

Bei einer zweckmäßigen Ausgestaltung der Erfindung wird die Breite und/oder Lage des Toleranzbands in Abhängigkeit von dem Stromsignal I gewählt und vorzugsweise mit zunehmendem Strom vergrößert und/oder mit abnehmendem Strom reduziert. Dabei wird davon ausgegangen, dass bei einem großen Wicklungsstrom der Läufer in der Regel beschleunigt wird, so dass die Drehzahl entsprechend ansteigt. Die Breite und/oder Lage des Toleranzbands wird also an die aufgrund der Bestromung der Wicklung zu erwartenden Drehzahländerungen des Läufers angepasst.

Wenn das Drehzahlsignal mit Störungen, wie zum Beispiel einer Welligkeit behaftet ist, schwankt meistens der Wicklungsstrom entsprechend. In diesem Fall kann es vorteilhaft sein, das Stromsignal I durch Filterung, insbesondere durch eine gleitende Mittelwertbildung, zu glätten und den Schätzwert $\omega_s(k)$ für den Drehzahlmesswert $\omega(k)$ mit Hilfe des gefilterten Stromsignals I zu bestimmten.

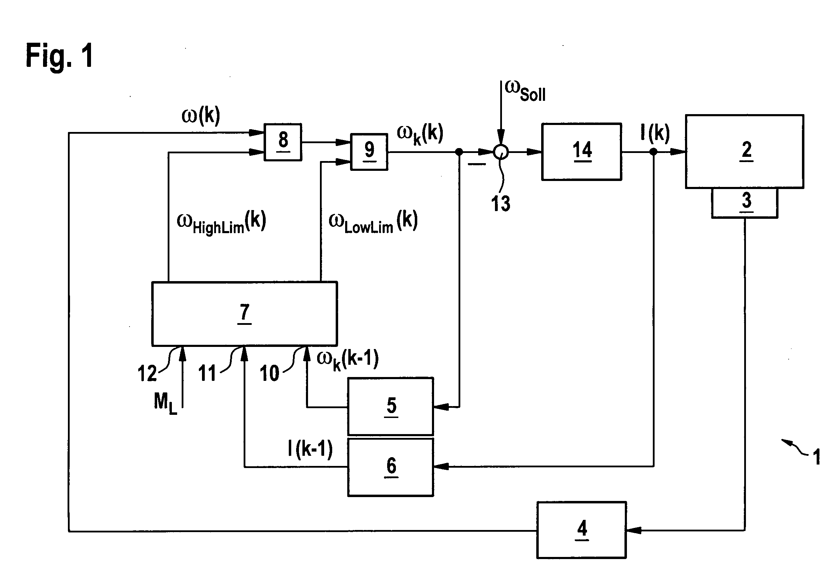

Nachfolgend ist ein Ausführungsbeispiel der Erfindung anhand der Zeichnung näher erläutert. Die einzige Fig. zeigt ein Signalflussdiagramm eines Drehzahlregelkreises für einen Elektromotor.

Ein elektrisches Gerät weist einen EC-Motor und einen im Ganzen mit 1 bezeichneten Drehzahlregelkreis für den EC-Motor auf. Der EC-Motor dient als Antriebsmotor für eine Verstelleinrichtung eines Kraftfahrzeugs, beispielsweise eine Nockenwellenverstelleinrichtung eines Hubkolben-Verbrennungsmotors oder eine Verstelleinrichtung für einen Schaltfinger eines Parallelschaltgetriebes. Der EC-Motor und die von ihm angetriebene mechanische Last bilden eine Regelstrecke, die in der Zeichnung mit 2 bezeichnet ist.

An dem EC-Motor ist ein Drehzahlsensor 3 angeordnet, der für jede Phase der EC-Motorwicklung jeweils einen Hallsensor aufweist, welcher in an sich bekannter Weise mit einem magnetisierten Ring des EC-Motor-Läufers zusammenwirkt, um ein Drehzahlmesssignal für die Läuferdrehzahl zu erfassen. Das Drehzahlmesssignal wird einem Abtasthalteglied 4 zugeführt, das aus dem Drehzahlmesssignal durch Abtasten mit einer konstanten Abtastrate 1/T eine Folge von Drehzahlmesswerten $\omega(k)$ erzeugt, die jeweils einem Abtastzeitpunkt k·T zugeordnet sind, wobei k ein ganzzahliger Index und T eine Abtastdauer ist.

Das elektrische Gerät weist ferner eine Begrenzungseinrichtung für die Drehzahlmesswerte $\omega(k)$ auf, die zwei Verzögerungsglieder 5, 6 eine Recheneinrichtung 7 und zwei Vergleichseinrichtungen 8, 9 umfasst. Ein Drehzahlmesssignaleingang 10 der Recheneinrichtung 7 ist über ein erstes Verzögerungsglied 5 mit einem Anschluss für ein korrigiertes Drehzahlsignal $\omega_k(k)$ verbunden. Mit Hilfe des ersten Verzögerungsglieds 5 wird das korrigierte Drehzahlsignal $\omega_k(k)$ um eine der Abtastdauer T entsprechende Zeitdauer verzögert. An dem Drehzahlmesssignaleingang 10 liegt somit ein Drehzahlsignal $w_k(k-1)$ an. Ein Stromsignaleingang 11 der Recheneinrichtung 7 ist über ein zweites Verzögerungsglied 6 mit einem Anschluss für ein Wicklungs-Stromsignal I(k) des EC-Motors verbunden. Mit Hilfe des zweiten Verzögerungsglieds 6 wird das Wicklungsstromsignal I(k) um eine der Abtastdauer T entsprechende Zeitdauer verzögert. An dem Stromsignaleingang 11 liegt somit ein Stromsignal I(k-1) an. Die Recheneinrichtung 7 weist ferner einen Lastmomentsignaleingang 12 auf, der mit einem Signal verbunden ist, das ein Maß für das mittlere Lastmoment $M_L$ des EC-Motors darstellt.

Mit Hilfe der Recheneinrichtung 7 werden aus dem Drehzahlsignal $\omega_k(k-1)$, dem Stromsignal I(k-1), dem verzögerten Lastmoment-Signal $M_L$, der Abtastdauer T, einem bekannten Trägheitsmomentwert J des Läufers, einer Motorkonstanten $K_t$ des EC-Motors und einer vorgegebenen Intervalgröße $\pm\Delta\omega_{Grenz}$ ein oberer Randwert $\omega_{HighLim}(k)$ und ein unterer Randwert $\omega_{Low-Lim}(k)$ für ein dem aktuellen Abtastschritt k jeweils zugeordnetes Toleranzband [$\omega_{LowLim}(k)$, $\omega_{HighLim}(k)$] berechnet:

$$\omega_{HighLim}(k) = \omega_k(k-1) + T/J [K_t \cdot I(k-1) - M_L(k-1)] + \Delta\omega_{Grenz}$$

$$\omega_{LowLim}(k) = \omega_k(k-1) + T/J [K_t \cdot I(k-1) - M_L(k-1)] - \Delta\omega_{Grenz}$$

Der obere Randwert $\omega_{HighLim}(k)$ wird einem ersten Eingang einer ersten Vergleichseinrichtung 8 zugeführt, die einen zweiten Eingang aufweist, an dem das Drehzahlsignal w(k) anliegt. Ein Ausgang der ersten Vergleichseinrichtung 8 ist mit einem ersten Eingang einer zweiten Vergleichseinrichtung 9 verbunden. An einem zweiten Eingang der zweiten Vergleichseinrichtung 9 liegt das mit Hilfe der Recheneinrichtung 7 ermittelte Signal für den unteren Randwert $\omega_{Low-Lim}(k)$

an. An einem Ausgang der zweiten Vergleichseinrichtung 9 wird das korrigierte bzw. auf das Toleranzband begrenzte Drehzahlsignal $\omega_k$(k) bereitgestellt.

Der Ausgang der zweiten Vergleichseinrichtung 9 ist mit einem Istwerteingang einer dritten Vergleichseinrichtung 13 verbunden. An einem Sollwerteingang der dritten Vergleichseinrichtung 13 liegt ein Drehzahlsollwertsignal $\omega_{Soll}$ an, das beispielsweise von einer übergeordneten Steuerung oder Regelung bereitgestellt wird. Die Differenz aus dem Drehzahlsollwertsignal $\omega_{Soll}$ und dem korrigierten Drehzahlsignal $\omega_k$(k) wird an einem Ausgang der dritten Vergleichseinrichtung 13 als Regelabweichung ausgegeben. Dieser Ausgang ist mit einem Eingang eines Drehzahlreglers 14 verbunden. An einem Ausgang des Drehzahlreglers 13 wird das bereits erwähnte Stromsignal I(k) bereitgestellt. Entsprechend diesem Stromsignal I(k) wird über eine in der Zeichnung nicht näher dargestellte Ansteuereinrichtung die Wicklung EC-Motors angesteuert, beispielsweise durch Pulsweitenmodulation einer an die Wicklung angelegten elektrischen Spannung.

**Bezugszeichenliste**

1     Drehzahlregelkreis
2     Regelstrecke
3     Drehzahlsensor
4     Abtasthalteglied
5     erstes Verzögerungsglied
6     zweites Verzögerungsglied
7     Recheneinrichtung
8     erste Vergleichseinrichtung
9     zweite Vergleichseinrichtung
10    Drehzahlmesssignaleingang
11    Stromsignaleingang
12    Lastmomentsignaleingang
13    dritte Vergleichseinrichtung
14    Drehzahlregler

**Patentansprüche**

1.   Verfahren zum Messen der Drehzahl einer einen Stator, einen Läufer und eine Wicklung aufweisenden elektrischen Maschine, insbesondere eines EC-Motors, wobei ein Drehzahlmesssignal w erfasst wird, indem für eine Reihe von Abtastzeitpunkten jeweils ein Drehzahlmesswert w(k) für den Läufer ermittelt wird, **dadurch gekennzeichnet, dass** ein Trägheitsmomentwert für das Massenträgheitsmoment des Läufers bestimmt wird, dass ein Stromsignal I erfasst wird, indem für die einzelnen Abtastzeitpunkte jeweils ein Stromwert I(k) für den elektrischen Strom in der Wicklung bestimmt wird, dass für die einzelnen Drehzahlmesswerte w (k) jeweils aus einem einem früheren Abtastzeitpunkt zugeordneten Drehzahlmesswert $\omega_k$(k-1), dem Stromsignal I und dem Trägheitsmomentwert ein Schätzwert $\omega_s$(k) für den Drehzahlmesswert w(k) bestimmt wird, dass diesem Schätzwert $\omega_s$(k) ein Toleranzband zugeordnet wird, in dem der Schätzwert $\omega_s$(k) enthalten ist, und dass für den Fall, dass der Drehzahlmesswert w(k) außerhalb des Toleranzbands liegt, der Drehzahlmesswert w(k) durch einen innerhalb des Toleranzbands befindlichen Drehzahlwert $\omega_k$(k) ersetzt wird.

2.   Verfahren nach Anspruch 1, **dadurch gekennzeichnet, dass** der Läufer mit einem Lastmoment belastet wird, dass für das Lastmoment ein Lastmomentsignal $M_L$ bereitgestellt wird, und dass der Schätzwert $\omega_s$(k) jeweils aus dem dem früheren Abtastzeitpunkt zugeordneten Drehzahlmesswert $\omega_k$(k-1), dem Stromsignal I, dem Lastmomentsignal $M_L$ und dem Trägheitsmomentwert bestimmt wird.

3.   Verfahren nach Anspruch 1 oder 2, **dadurch gekennzeichnet, dass** die an der Wicklung anliegende elektrischen Spannung erfasst wird, und dass die Stromwerte I(k) indirekt aus der Spannung, der Impedanz der Wicklung, dem gegebenenfalls korrigierten Drehzahlmesswert $\omega_k$(k) und einer Maschinenkonstanten bestimmt wird.

4.   Verfahren nach einem der Ansprüche 1 bis 3, **dadurch gekennzeichnet, dass** das Toleranzband durch Randwerte begrenzt ist, und dass der Drehzahlmesswert w(k), der außerhalb des Toleranzbands liegt, auf den ihm am nächsten liegenden Randwert des Toleranzbands korrigiert wird.

**5.** Verfahren nach einem der Ansprüche 1 bis 4, **dadurch gekennzeichnet, dass** die Breite und/oder Lage des Toleranzbands in Abhängigkeit von dem dem früheren Abtastzeitpunkt zugeordneten Drehzahlmesswert $\omega_k(k-1)$ gewählt wird und vorzugsweise mit zunehmender Drehzahl reduziert und/oder mit abnehmender Drehzahl vergrößert wird.

**6.** Verfahren nach einem der Ansprüche 1 bis 5, **dadurch gekennzeichnet, dass** die Breite und/oder Lage des Toleranzbands in Abhängigkeit von dem Stromsignal I gewählt wird und vorzugsweise mit zunehmendem Strom vergrößert und/oder mit abnehmendem Strom reduziert wird.

**7.** Verfahren nach einem der Ansprüche 1 bis 6, **dadurch gekennzeichnet, dass** das Stromsignal I durch Filterung, insbesondere durch eine gleitende Mittelwertbildung, geglättet wird, und dass der Schätzwert $\omega_s(k)$ für den Drehzahlmesswert $\omega(k)$ mit Hilfe des gefilterten Stromsignals I bestimmt wird.

Fig. 1

| | Europäisches Patentamt | EUROPÄISCHER RECHERCHENBERICHT | | Nummer der Anmeldung EP 05 01 3450 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 680 518 A (KURAKAKE ET AL) 14. Juli 1987 (1987-07-14) * Spalte 2, Zeile 20 - Spalte 4, Zeile 29; Abbildungen 1-5 * ----- | 1-5 | H02P23/03 H02P23/12 H02P23/14 |
| A | EP 0 314 800 A (FANUC LTD) 10. Mai 1989 (1989-05-10) * Seite 4, Zeile 3 - Seite 7, Zeile 15; Abbildungen 1,2 * ----- | 1-7 | |
| A | EP 0 514 847 A (KABUSHIKI KAISHA MEIDENSHA) 25. November 1992 (1992-11-25) * Seite 5, Zeile 30 - Seite 13, Zeile 25; Abbildungen 1-16 * ----- | 1-7 | |
| A | DE 41 22 391 A1 (ROBERT BOSCH GMBH, 7000 STUTTGART, DE) 7. Januar 1993 (1993-01-07) * Seite 2, Zeile 53 - Seite 4, Zeile 39; Abbildungen 1,2 * ----- | 1-7 | |

**RECHERCHIERTE SACHGEBIETE (Int.Cl.7)**

H02P

Der vorliegende Recherchenbericht wurde für alle Patentansprüche erstellt

| Recherchenort | Abschlußdatum der Recherche | Prüfer |
|---|---|---|
| Den Haag | 13. Oktober 2005 | Davis, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

# EP 1 612 923 A1

**ANHANG ZUM EUROPÄISCHEN RECHERCHENBERICHT
ÜBER DIE EUROPÄISCHE PATENTANMELDUNG NR.**

EP 05 01 3450

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 4680518 | A | 14-07-1987 | EP | 0208788 A1 | 21-01-1987 |
| | | | JP | 61164481 A | 25-07-1986 |
| | | | WO | 8604194 A1 | 17-07-1986 |
| EP 0314800 | A | 10-05-1989 | DE | 3884745 D1 | 11-11-1993 |
| | | | DE | 3884745 T2 | 27-01-1994 |
| | | | WO | 8808640 A1 | 03-11-1988 |
| | | | JP | 63274385 A | 11-11-1988 |
| | | | US | 5006770 A | 09-04-1991 |
| EP 0514847 | A | 25-11-1992 | US | 5325460 A | 28-06-1994 |
| DE 4122391 | A1 | 07-01-1993 | WO | 9301651 A1 | 21-01-1993 |
| | | | EP | 0593523 A1 | 27-04-1994 |
| | | | ES | 2082477 T3 | 16-03-1996 |

Für nähere Einzelheiten zu diesem Anhang : siehe Amtsblatt des Europäischen Patentamts, Nr.12/82

EPO FORM P0461